(19) **Europäisches Patentamt European Patent Office Office européen des brevets**

(11) **EP 2 351 255 B1**

(12) **EUROPEAN PATENT SPECIFICATION**

(45) Date of publication and mention of the grant of the patent:
**10.10.2012 Bulletin 2012/41**

(51) Int Cl.:
*H04B 7/26* (2006.01)    *H04B 17/00* (2006.01)

(21) Application number: **09776954.1**

(86) International application number:
**PCT/EP2009/004835**

(22) Date of filing: **04.07.2009**

(87) International publication number:
**WO 2010/060490 (03.06.2010 Gazette 2010/22)**

(54) **SINGLE INPUT SINGLE OUTPUT REPEATER FOR RELAYING A MULTIPLE INPUT MULTIPLE OUTPUT SIGNAL**

SISO-RELAIS ZUM WEITERLEITEN EINES MIMO-SIGNALS

RÉPÉTEUR SISO POUR RELAYER UN SIGNAL MIMO

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 US 118226 P**

(43) Date of publication of application:
**03.08.2011 Bulletin 2011/31**

(73) Proprietor: **Andrew Wireless Systems GmbH 86675 Buchdorf (DE)**

(72) Inventors:
• **BRAZ, Oliver**
  **86653 Monheim (DE)**
• **EISENWINTER, Stefan**
  **86675 Buchdorf (DE)**
• **SCHMALISCH, Mathias**
  **86165 Augsburg (DE)**
• **STEFANIK, Jörg**
  **86609 Donauwörth (DE)**

(74) Representative: **FDST Patentanwälte Nordostpark 16 90411 Nürnberg (DE)**

(56) References cited:
**KR-B1- 100 728 639**

## Description

The invention relates to signal transmission and, more specifically, to multiple input multiple output (MIMO) signal transmission.

In the last few years, the demand for high network capacity and performance in wireless services has increased. One method of increasing spectral efficiency is through the implementation of a multiple input, multiple output (MIMO) system where signals are space-multiplexed with an antenna array. MIMO systems use multiple transmit and multiple receive antennas, all communicating on the same frequencies at the same time in an orthogonal, de-correlated fashion. A MIMO signal may transmit a signal with less error in an environment where line of sight is reduced or eliminated and different path lengths are expected for different parts of the signal.

In order to efficiently extend the coverage area for wireless signals, repeaters and repeater-like systems are used. However, conventional repeaters or repeater-like systems are single input, single output (SISO) systems designed to amplify and relay a transmission signal from a base station to a receiver through a single transmission channel. It would be cost-effective to utilize these conventional repeaters and repeaterlike systems to amplify and relay MIMO transmissions. However, in implementing a SISO system with MIMO signals, there is a concern that a SISO repeater may reduce the benefits of such MIMO signals. More specifically, there is a concern that such a SISO device or system might destroy the MIMO coding of the signals and thereby create interference and degrade the system.

It is thus desirable to extend the coverage of a MIMO signal using a SISO repeater to transmit the MIMO signal without losing the benefits of the MIMO system.

A SISO relay device subjects each of the separate antenna signals of the MIMO transmission to a scrambler that simulates the effects of Rayleigh fading. The Rayleigh channel simulators output to the single input SISO relay. In one embodiment, the relay is a wireless repeater. In another embodiment, the relay is a fiber optic or coaxial cable transmission station.

An example of SISO repeater is disclosed in KR 100 728639

The accompanying drawings, which are incorporated in and constitute a part of this specification, illustrate embodiments of the invention and, together with the detailed description of the embodiments given below, serve to explain the principles of the invention.

FIG. 1 is a flow diagram showing the processing associated with a MIMO transmission.

FIG. 2A shows an illustration of a wireless signal transmission without a repeater.

FIG. 2B schematically shows the antenna interaction from FIG. 2A for a MIMO system.

FIG. 3A shows an illustration of a wireless signal transmission including a repeater device or system.

FIG. 3B schematically shows the antenna interaction for a MIMO system and SISO device/system from FIG. 3A.

FIG. 4A shows an illustration of a wireless signal transmission including two repeaters operating in parallel.

FIG. 4B schematically shows the antenna interaction from FIG. 4A for a MIMO system with multiple SISO devices/systems.

FIG. 5 is a flow diagram showing a simulation process for Rayleigh distribution in accordance with the invention.

FIG. 6 is a chart showing the results of simulated Rayleigh distribution for different transmission configurations in accordance with aspects of the invention.

FIG. 7 is a schematic diagram showing the configuration associated with measuring the effects of Rayleigh distribution for different transmission configurations in accordance with the invention.

FIG. 8 is a chart showing the results of the measuring system of FIG. 7.

FIGS. 9A-9C show three embodiments of a MIMO wireless system including Rayleigh channel simulators in combination with a SISO repeater.

FIG. 10 schematically shows MIMO antenna interaction in the embodiment of FIG. 9A.

FIGS. 11A-11C schematically show three embodiments of a MIMO system with a fiber optic distribution system including Rayleigh channel simulators.

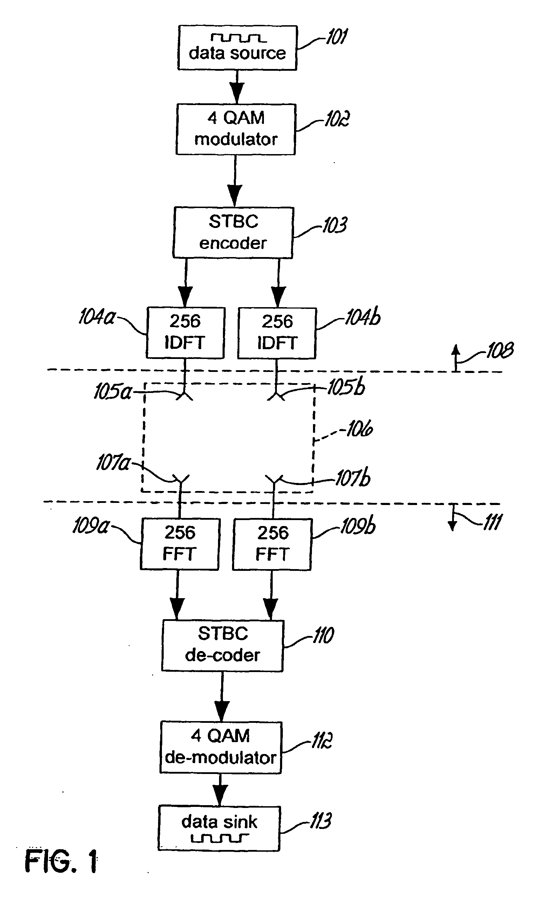

FIG. 1 shows a process diagram for an exemplary MIMO transmission of wireless signals, in this case using orthogonal frequency-division multiplexing (OFDM). Data from a data source 101 is converted into a carrier signal by quadrature amplitude modulation (QAM) 102. The modulated signal then undergoes Space-Time Block Code (STBC) encoding 103 to split it into multiple (shown as two) orthogonal signals, each of , which undergoes inverse discrete Fourier transformation 104a, 104b before being transmitted by radio antennas 105a, 105b through a transmission environment 106. For simplicity, other components relevant to ODFM transmission, such as pilot tone and cyclic prefix insertion, are not included in the diagram but are understood to one skilled in the art. The system components above reference line 108 might be the base station side of a MIMO system. The transmission environment 106 for the MIMO signals may subject the signals to a variety of radio channel wave propagation phenomena, such as vacuity propagation, reflection, transmission, diffusion, deflection, and refraction, which may delay and distort the signal. Receiving antennas 107a, 107b pick up the resulting signals, which undergo Fourier transformation 108 before being properly decoded according to the Space-Time Block Coding (STBC) algorithm 110, converting them into a single signal. A QAM demodulator 112 restores the carrier signal to data, which is received by the data sink 113. The system components below reference line 111 might be a mobile device, such as a cellular phone.

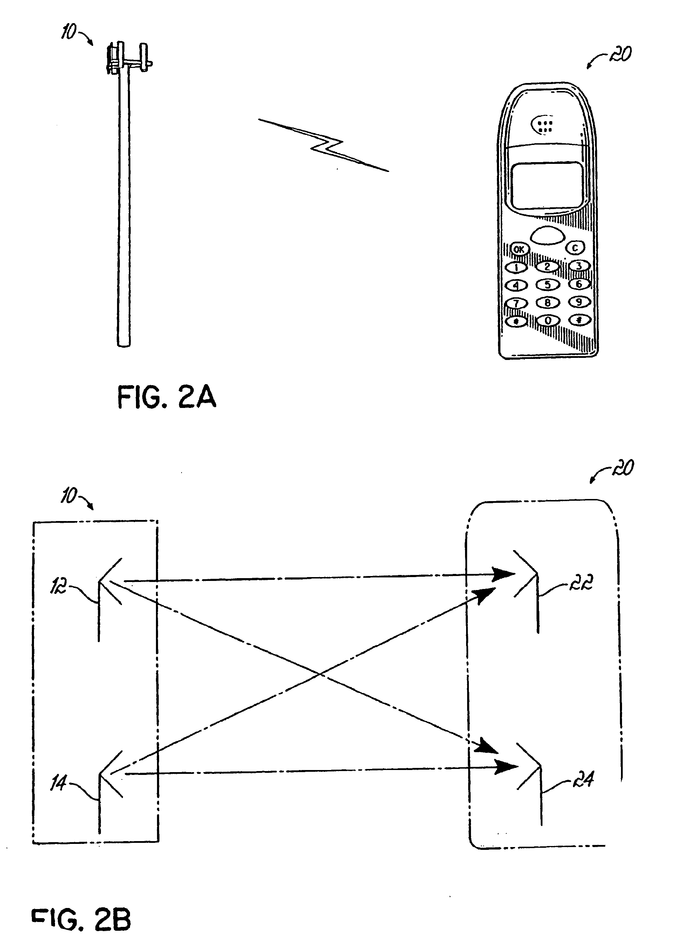

FIGS. 2A and 2B show a typical MIMO downlink transmission between a base station 10 and a receiver 20 such as a wireless device (e.g. cell phone). The base station 10, such as a broadcast tower, has multiple transmitting antennas 12 and 14. The receiver 20, such as a wireless device, has multiple receiving antennas 22 and 24. The base station antennas 12 and 14 each transmit part of the signal according to an appropriate MIMO algorithm, such as the Space-Time Block Coding (STBC) algorithm noted above. The receiving antennas 22 and 24 obtain the separate channels and reconstruct the signal. Although two antennas are used in this example, any additional number of antennas on each of the transmitter and receiver may be used and are consistent with the MIMO transmission protocol.

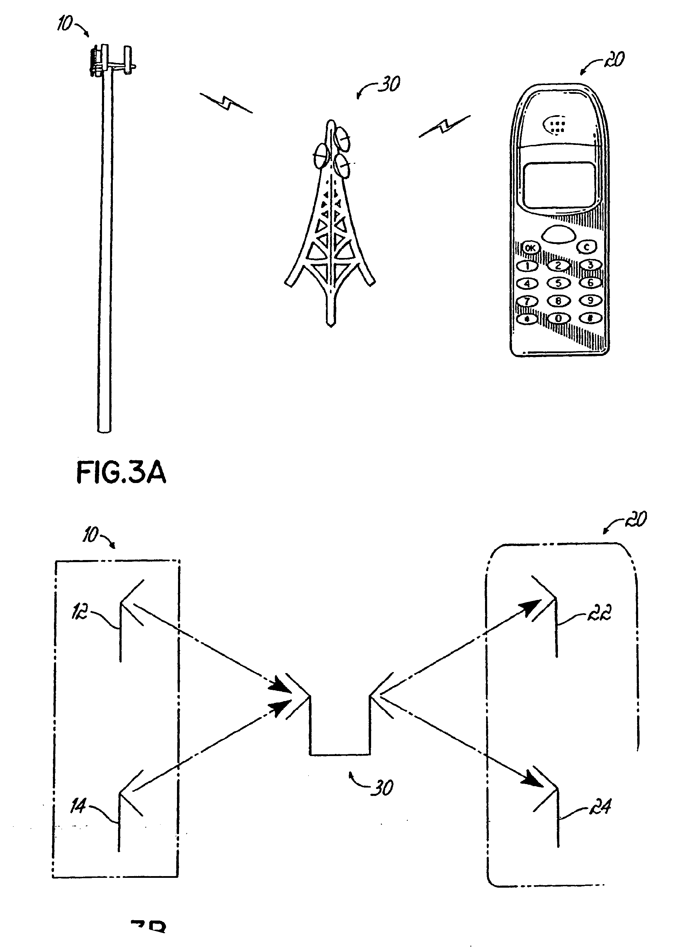

As shown in FIGS. 3A and 3B, a repeater 30 is often necessary in order to carry the signal to the receiver 20 and expand the coverage of the base station 10. Here, in accordance with one feature of the invention, the repeater 30 is shown as a SISO wireless relay. In circumstances where a transmitted signal cannot be effectively sent directly between the base station 10 and the receiver 20, a repeater 30 may be able to obtain the signal, amplify it, and retransmit the signal towards the receiver 20. The repeater 30 usually communicates with the base station 10 via a line of sight (LOS) connection. As noted above, there is concern when using a SISO repeater or other SISO element or system in the wireless path that the beneficial result of a MIMO system might be lost.

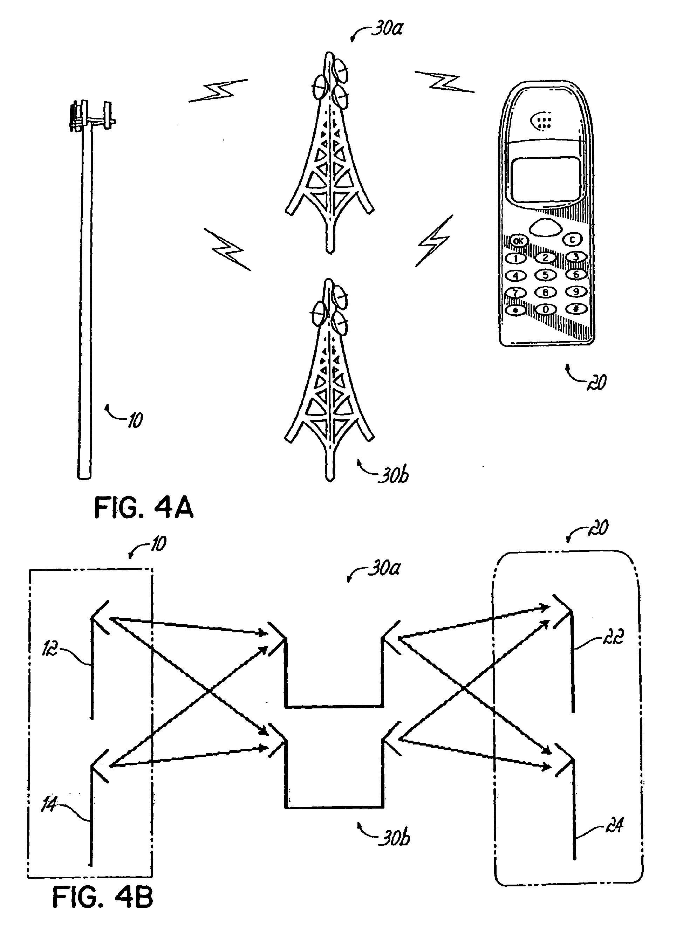

In some situations, multiple SISO repeaters 30a, 30b may be able to work in parallel in order to better carry the signal, as shown in FIGS. 4A and 4B. SISO repeaters designed to work independently could, for signals in certain overlapping regions, redundantly carry and transmit the same signal. Alternatively, SISO repeaters could be stationed in closer proximity so as to retransmit in parallel over a wide signal area. But even with multiple repeaters 30a, 30b, there are still the noted concerns of SISO components in a MIMO system. Although the embodiment of the present invention shown in FIG. 3B illustrates a SISO repeater 30 pulling the signals off-air, a wired system, such as a fiber optic or coaxial SISO relay system, may also be utilized as discussed below and would present the same concerns of a SISO component in a MIMO system.

The present invention addresses such concerns and provides a SISO component that operates within a MIMO or diversity network while maintaining the benefits of the MIMO network. Particularly, a SISO component is provided by the invention that subjects the signals coming from the MIMO antennas to an artificial Rayleigh channel prior to transmission via the SISO component or SISO signal path.

For the purpose of illustrating features and benefits of the invention, a simulation was created evaluating the error rate of SISO and MIMO systems, both with and without SISO repeaters, in a situation where the radio wave propagation resembles the distribution of Rayleigh fading channels.

In a real radio channel, wave propagation phenomena can and do occur. The most common phenomena are vacuity propagation, reflection, transmission, diffusion, deflection and refraction. If only the first two phenomena are taken into consideration and used for a first approximation, the result will be that the receiver receives signals that have gone through various different paths. Since these paths have different lengths, they will have different delays and will, in turn, produce either constructive or destructive interference.

If the number of types of different channels is not exactly known, the problem of channel modeling must be approximated using statistical means. In the case of a multipath channel, the signal amplitudes follow a Rice distribution, whereas the phase shifts must be considered as evenly distributed. In accordance with the invention, in a radio channel with no line of sight (NLOS), where no particular path is dominant, the Rice distribution turns into a Rayleigh distribution. Such channels are then denominated as Rayleigh fading channels. Moreover, a signal where the distribution is Rayleigh and the phases are evenly distributed can be modeled using multiplication with a complex Gaussian, zero mean random variable.

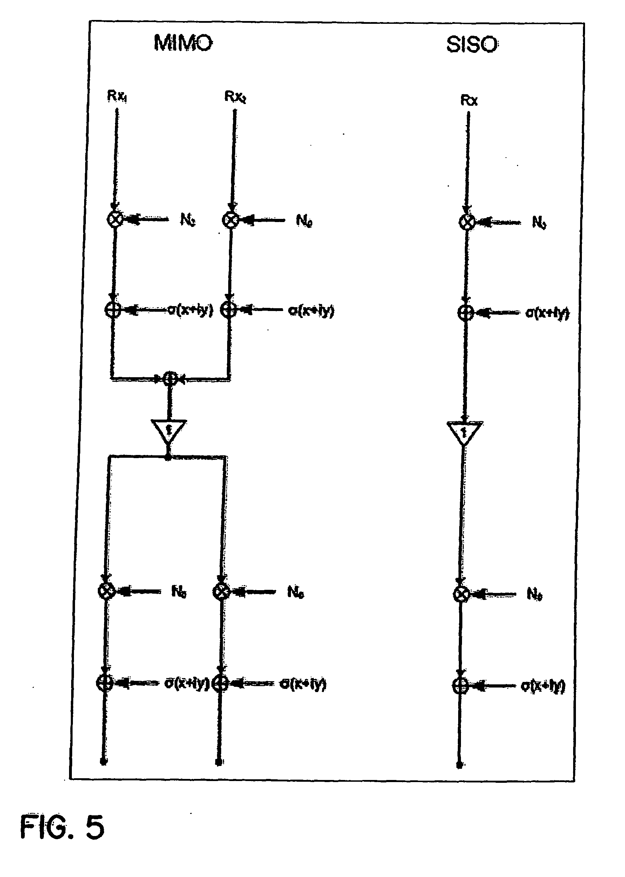

The simulation process establishing one embodiment of the invention is shown in diagrammatic form in FIG. 5 for one SISO repeater for both a MIMO and a SISO channel. The addition of a constant No represents the presence of additive white Gaussian noise, while the function represents the simulated Rayleigh distribution. Although the simulation as illustrated in FIG. 5 includes the introduction of Rayleigh scattering both before and after application of the SISO repeater, the second application of the Rayleigh scattering function is optional and not used in certain embodiments of the invention.

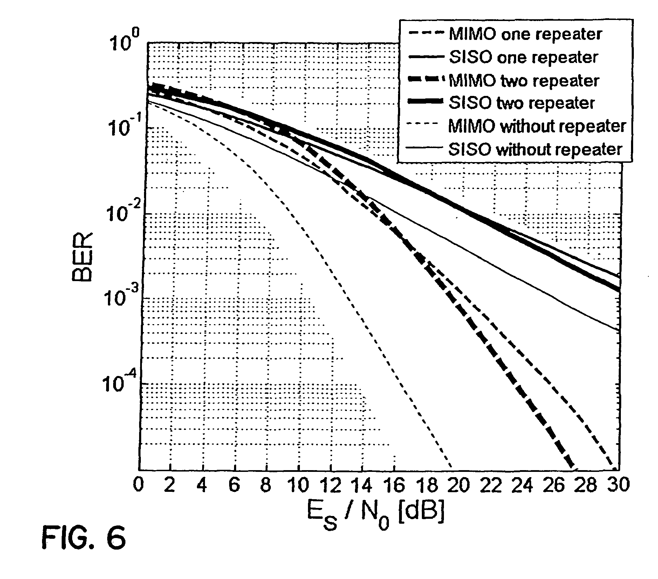

The simulation discussed below is designed to evaluate the effects of zero, one, or two repeaters on the bit error rate (BER) associated with a given signal-to-noise (S/N) ratio for the transmitted signals. The results are shown in the chart at FIG. 6. A MIMO system used with no repeater shows the best bit error rate (BER) at all S/N levels. Of course, in such a situation, the benefits of the repeater or relay element would not be realized. Compared to a SISO system with no repeater, the MIMO system without a repeater shows a steeper error reduction curve, with the BER decreasing much faster than a similar SISO system.

The introduction of a SISO repeater impairs the bit error rate. This is clear from a comparison of the MIMO systems with zero, one, and two repeaters, and additionally from a comparison of the SISO systems with zero, one, and two repeaters. However, the gain of the MIMO system remains almost unaffected by the addition of one or more repeaters. Both one- and two-repeater curves for the MIMO systems show the steep decrease in BER at higher S/N characteristic of the MIMO system, and above approximately 12 dB, the BER is improved over a no-repeater SISO system at the same S/N. A MIMO system with two repeaters shows a steeper curve with a better BER at a S/N above 17 dB. Even so, the significant increase in the cost of the additional SISO repeater equipment may not be worth the small benefit of adding a second SISO repeater in parallel with the first.

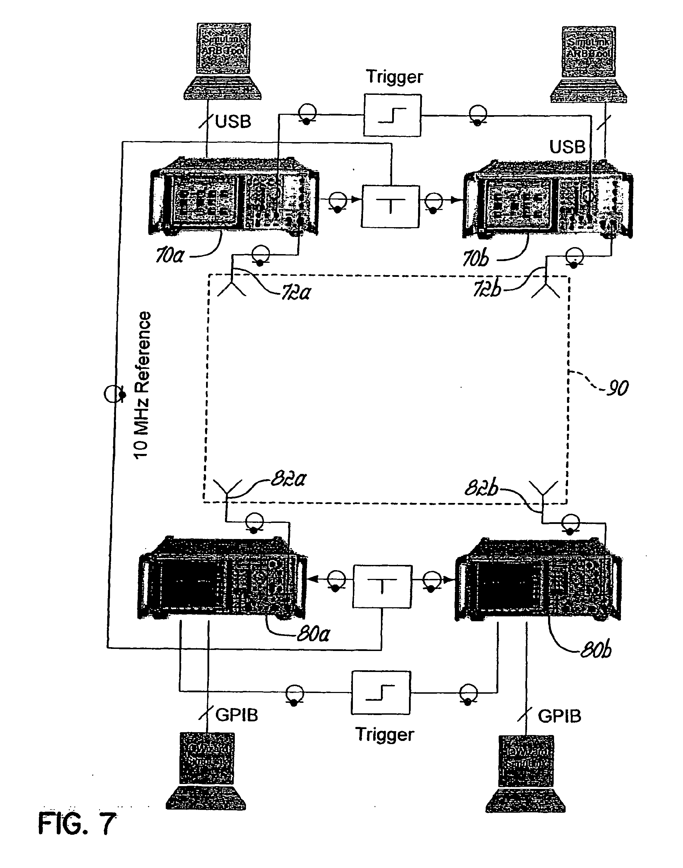

As a further evaluation of aspects of the invention, a physical measuring system was constructed in a laboratory setting, the basic configuration of which is shown in FIG. 7. The laboratory configuration was designed to prevent a line of sight (LOS) situation and eliminate line-of-sight channels, thus producing conditions as close to a Rayleigh distribution as was experimentally feasible.

To be able to use the standard components available in the laboratory, a frequency of 2115 MHz was chosen. Two signal generators 70a, 70b with an integrated arbitrary wave form generator were used as transmitters and then radiated via two independent transmitting antennas 72a, 72b. The signals were captured by two independent receiving antennas 82a, 82b. All four antennas 72a, 72b, 82a, 82b were structurally identical. The receivers 80a, 80b used to analyze the signal provided baseband data directly via a computer interface (GPIB) in the Matlab format as would be known to a person of ordinary skill in the art.

Since a highly scattering radio channel was desired, the transmission environment 90 used for the laboratory setup was specially prepared. The setup was configured to avoid a direct line of sight between transmitting antennas 72a, 72b and receiving antennas 82a, 82b. Measurements were taken with zero, one, and two SISO repeaters added to the transmission environment 90. The SISO repeater type used for the measurements was a sub-band selective, off-air repeater, with a gain of 50 dB. Since these SISO repeaters provide no protection against feedback (which creates interference and possibly oscillation), the receiving and donor antennas were separated by a thick, metal-coated fire door in the test configuration. This setup also served to ensure there was no propagation path from transmitter to receiver that had not passed through the SISO repeater.

Five megasamples were recorded per measurement. These were first downsampled by a factor of 2. Thus, a maximum of 130 frames were recorded. Assuming that the first and the last frame were not received completely, 128 frames of useable data remained, comprising 2,359,296 data bits. With 12 different energy stages, an average of 196,608 bits was available for each energy stage. Measurements were repeated several times.

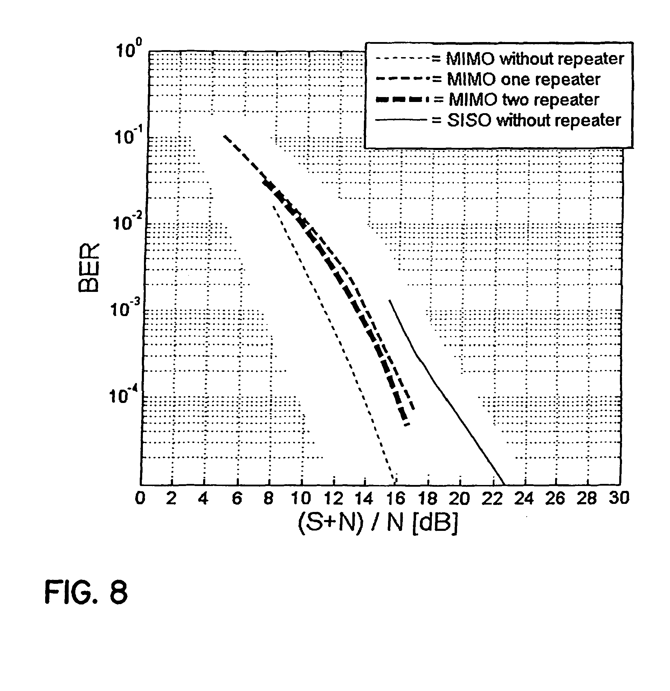

FIG. 8 shows the measurement results with their corresponding averages. This data confirms the assumption that a MIMO channel with a repeater provides better results than a comparable SISO system. A MIMO transmission with a repeater provides better results than a pure SISO connection without a repeater. A specific ranking is clear as well. A MIMO system without a repeater delivers the optimal BER at a given signal-to-noise figure. Of course, as noted above, such a system would not have the advantages of increased signal coverage as it lacks a repeater. The next BER curve is for a MIMO system with two repeaters, followed by a MIMO system with one repeater. Finally a SISO system without a repeater has a less desirable curve than any of the other measured scenarios. This data confirms that SISO transmissions within a MIMO network do not generally destroy the space-time block coding of the MIMO transmission when the SISO signals are subjected to a Rayleigh channel prior to SISO transmission. The benefits of MIMO transmission are shown to be at least partially preserved for a Rayleigh channel signal retransmitted over a SISO repeater.

The results of both the computer simulation and experimental measuring system establish that the effects and benefits of a MIMO system continue to apply even with the addition of one or two SISO repeaters, providing that the Rayleigh channels dominate the signal transmission. The present invention takes advantage of these results and provides a signal processing prior to SISO transmission of the signals. Specifically, the invention includes processing MIMO transmission signals to include a simulated Rayleigh distribution in each channel before combining the signals and relaying them through a SISO repeater.

In one embodiment of the invention, the Rayleigh channel simulator may modify the signal by use of a complex Gaussian, represented by:

$$g_n = x_n + i\, y_n \quad (1)$$

where each $x_n$ is randomly generated from a Gaussian distribution with a mean of zero, and each $y_n$ is generated independently from $x_n$ by the same Gaussian distribution (having a mean of zero and the same variance). By generating a separate complex Gaussian $g_1$, $g_2$, etc. for each channel of the MIMO transmission, Rayleigh channels are approximated even in situations where Rayleigh scattering does dominate the transmission environment. One embodiment of a Rayleigh channel simulator may be implemented in a digital signal processing environment, such as that used in certain offair wireless repeaters as known in the art.

In another embodiment, the Rayleigh channel simulator may comprise the use of analog delay channels, with the lengths of the channels decorrelated so as to decouple the phase distribution of the signal as required by a Rayleigh distribution. Such physical delay channels may be preferable in an analog signal processing environment, such as that used in certain analog cable repeaters as known in the art.

Other signal processing methods for generating the effects of a Rayleigh distribution are known to one of ordinary skill and may be utilized in accordance with the principals of the present invention.

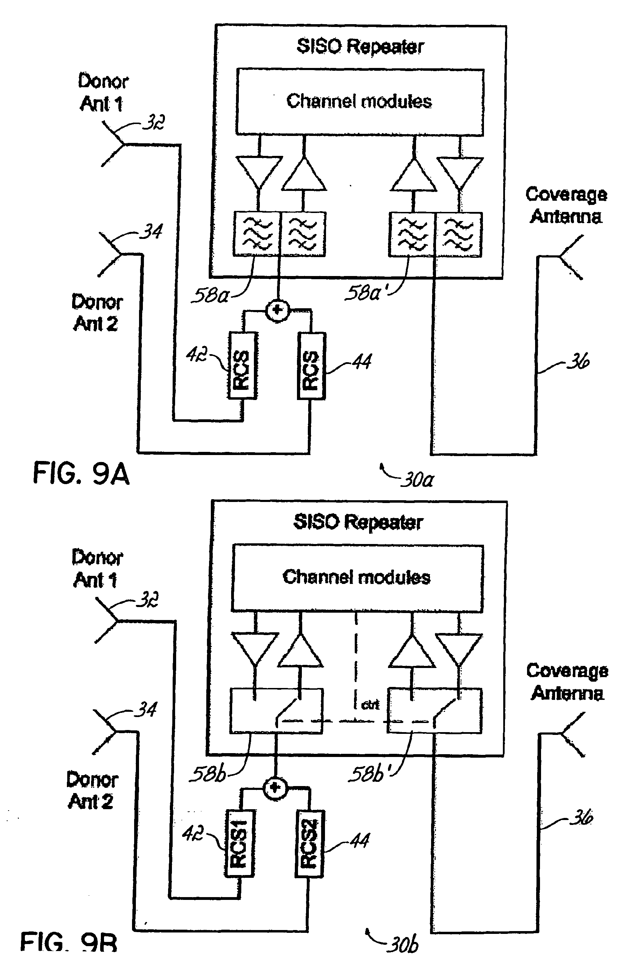

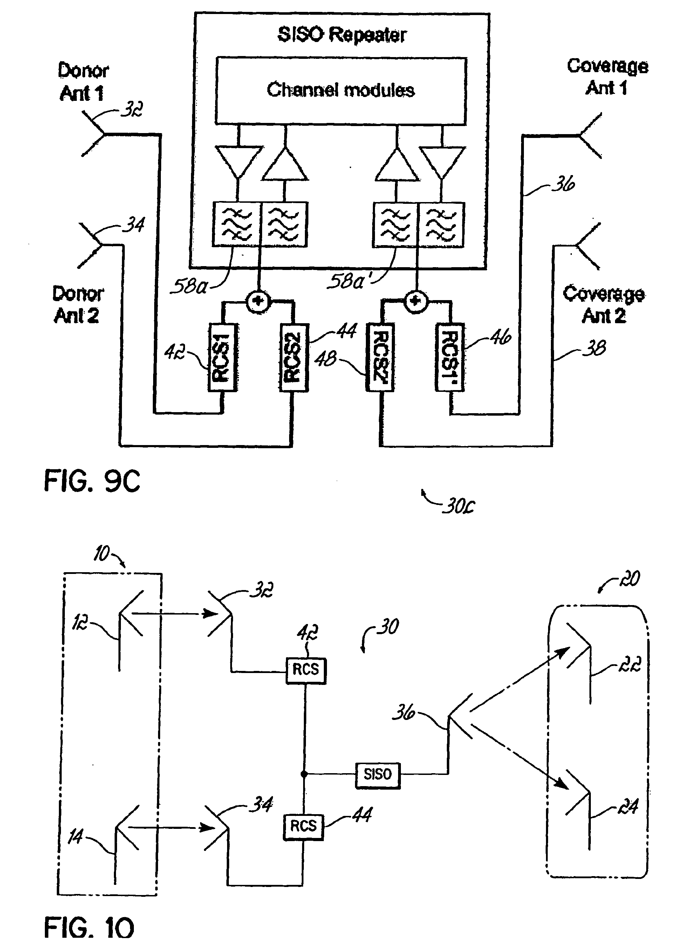

FIGS. 9-11 show embodiments of the present invention, where each MIMO signal is subjected to an artificial Rayleigh channel prior to transmission via a SISO system.

FIGS. 9A and 9B show two different embodiments of a single SISO repeater 30a, 30b, which includes Rayleigh channel simulators 42 and 44. The Rayleigh channel simulators 42 and 44 are positioned in line before the signals from the two donor antennas 32 and 34 of the repeater are combined and retransmitted as part of a downlink signal transmission. As disclosed above, STBC or any suitable MIMO parameters are preserved in the relay of the artificial (or real and artificial) Rayleigh scattered signals through a SISO repeater using the invention. By assuring that each signal simulates a Rayleigh distribution prior to the signals' combination, the combination of the multiple signals and retransmission as a single signal does not negate the MIMO effects in accordance with the invention. As such, a SISO component may be used in a MIMO system while still maintaining the benefits of the overall MIMO system.

The SISO repeater of FIG. 9A allows for uplink and downlink transmission simultaneously through use of frequency division duplexing (FDD). The frequency duplexers 58a and 58a' provide the necessary frequency translation for this function. The SISO repeater of FIG. 9B instead utilizes non-simultaneous uplink and downlink transmissions. This is accomplished through the use of time division duplexing (TDD). The switches 58b and 58b' facilitate the time division between the uplink and downlink transmissions.

FIG. 10 shows an interaction between antennas of both a base station 10 and receiver 20 with the addition of the Rayleigh channel simulators. The base station transmission antennas 12 and 14 each transmit their part of the MIMO signal, which are received by the donor antennas 32 and 34 of the SISO repeater 30, and are processed into a simulated Rayleigh distribution by the Rayleigh channel simulators 42 and 44 before being combined and retransmitted by a single coverage antenna 36 to the multiple receiving antennas 22 and 24 of the receiver 20.

As demonstrated above, adding the Rayleigh channel simulators on the donor antenna side preserves MIMO effects for downlink transmission. FIG. 9C shows the addition of a second coverage antenna 38 with an additional pair of channel simulators 46 and 46 associated therewith. This preserves the MIMO encoding for uplink transmissions sent from the receiver such as a cell phone back to the base station as described above. By processing both uplink and downlink signals with Rayleigh channels prior to SISO relay, MIMO effects are preserved in both directions.

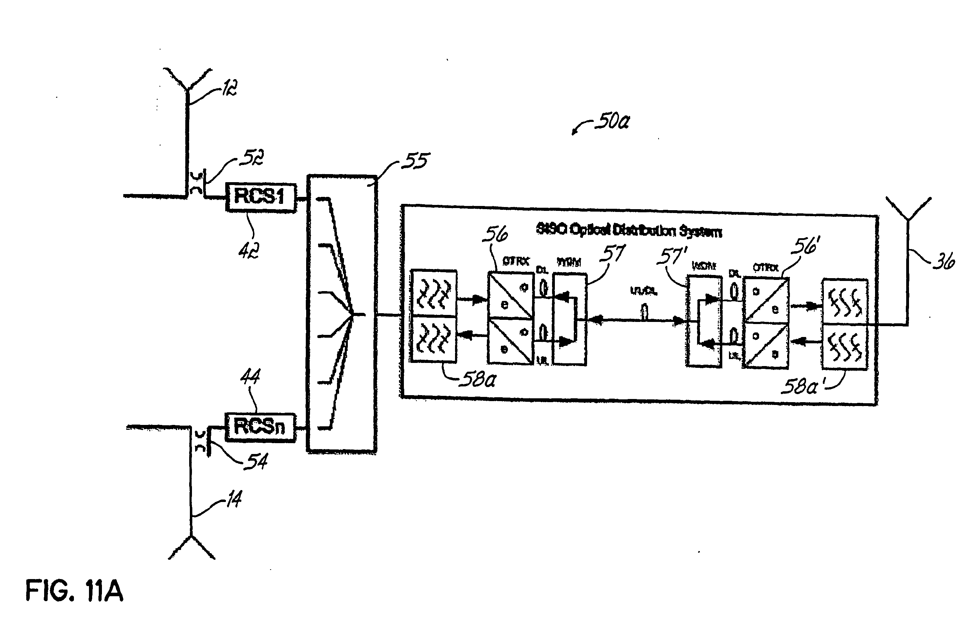

FIGS. 11A through 11C show additional embodiments, wherein the SISO relay element or channel is a cable distribution system 50a, 50b, 50c, such as a cable relay station, rather than a wireless relay system. Each base station antenna 12, 14 includes a coupled signal that is routed to a cable 52, 54, which may be a fiber optic or coaxial cable for example. The signal in each cable is processed into a simulated Rayleigh distribution by Raleigh channel simulators 42, 44 (RCS$_1$, ... RCS$_n$) before the signals are combined by an electrical combiner 55 into a single signal.

The combined electrical signal is then converted by an optical transceiver 56 into an optical signal. In the illustrated embodiments of FIGS. 11A through 11C, the signal is directed through a wave division multiplexer 57 that allows a single length of optical transmission cable 58 to carry signals in both directions. After having been demultiplexed by another wave division multiplexer 57' and converted back into an electrical signal by a second optical transceiver 56'; a coverage antenna 36 is used to retransmit the signal to a wireless receiver, as above.

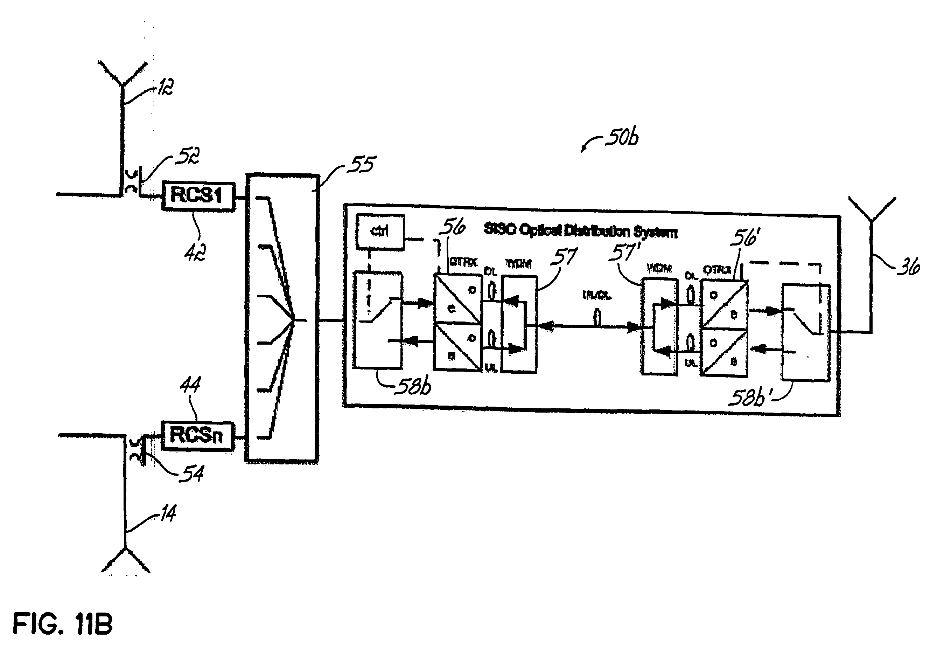

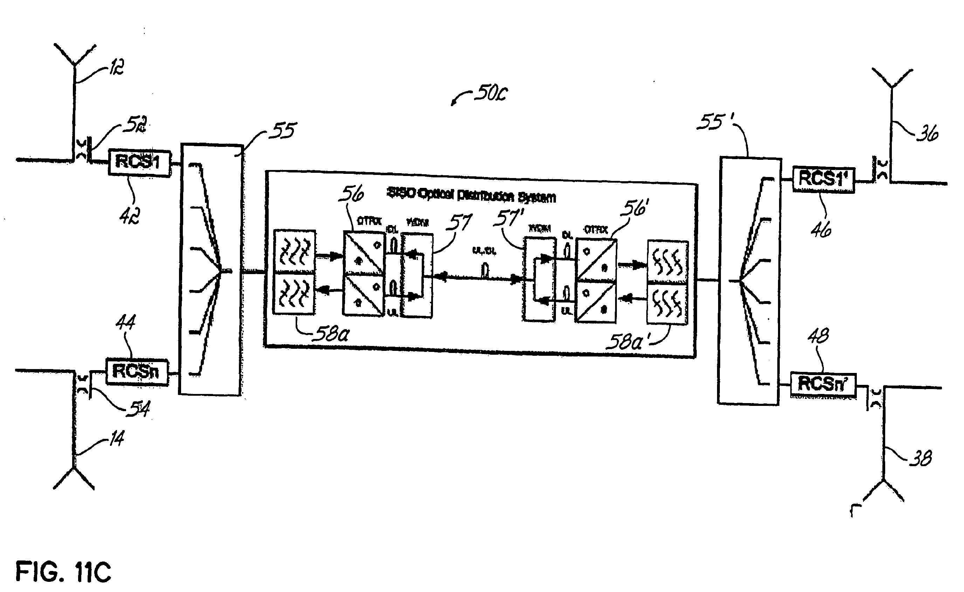

As with FIGS. 9A through 9C, FIGS. 11A through 11C show different embodiments of the invention. FIGS. 11A and 11C use an FDD process with duplexers 58a, 58a' while FIG. 11B uses a TDD process with switches 58b, 58b'. FIGS. 11C again allows for uplink as well as downlink transmission to preserve MIMO effects by the addition of coverage-side RCS 46, 48 (RCS$_1$',... RCS$_n$') associated with dual antennas 36, 38. A combiner 55' is also added to accommodate the multiple coverage antennas.

The embodiments described herein are not intended as limiting examples. Any number of MIMO signals can be combined as described. The example of two MIMO signals in some examples is in no way limiting on the scope of the invention. Similarly, one skilled in the art recognizes that other methods of simulating Rayleigh scattering and other methods of MIMO transmission might be used to practice the present invention.

## Claims

1. A SISO repeater (30a,30b,30c) comprising:

   a plurality of signal input channels (32,34) receiving respective input signals **characterised by**
   a Rayleigh channel simulator (42,44) associated with each input channel and operable to process each received signal into a signal consistent with a Rayleigh distribution;
   and a combiner for combining the processed signals into a single signal , which is retransmitted by the SISO repeater.

2. The SISO repeater of claim 1, wherein each Rayleigh channel simulator is configured to multiply its respective input signal by a complex Gaussian random variable in order to simulate a signal consistent with a Rayleigh distribution.

3. The SISO repeater of claim 1, wherein each Rayleigh channel simulator represents a plurality of signal delay channels.

4. The SISO repeater of claim 1,
wherein the SISO repeater is a wireless relay station,
wherein the plurality of signal input channels each
further include an associated donor antenna for receiving signals, and
wherein the single combined signal is retransmitted
through a single coverage antenna.

5. The SISO repeater of claim 1,
wherein the SISO repeater is a cable relay station,
wherein the plurality of signal input channels each
include a separate signal relay cable having the
Rayleigh channel simulator associated with the input
channel, and
wherein the single combined signal is retransmitted
through a single coverage antenna.

6. The SISO repeater of claim 1,
wherein the SISO repeater is a cable relay station,
wherein the plurality of signal input channels each
include a separate signal relay cable having the
Rayleigh channel simulator associated with the input
channel, and
wherein the single combined signal is split and retransmitted through a plurality of relay cables.

7. The SISO repeater of claim 1,
wherein the SISO repeater is a cable relay station,
wherein the plurality of signal input channels each
include a separate signal relay cable having the
Rayleigh channel simulator associated with the input
channel, and
wherein the single combined signal is split and retransmitted through a plurality of coverage antennas.

8. A method for transmitting a MIMO signal, comprising:

splitting a signal into multiple signals using a MIMO algorithm to create a signal that is spatially
multiplexed;
transmitting the multiplexed signal from a base
station with multiple antennas,
each antenna transmitting a different one of the
multiple signals;
receiving the signals at a SISO repeater system
**characterised by**
separately processing each of the multiple split
signals into a simulated Rayleigh distribution;
and
combining the multiple split signals and transmitting the combined signal over a single antenna.

9. The method of claim 8, further comprising:

receiving the combined signal through multiple
antennas associated with a receiver; and
the receiver recombining the signals from the
multiple antennas in accordance with the spatially multiplexing MIMO algorithm.

10. A method for transmitting a signal, comprising:

splitting a signal into multiple signals using a MIMO algorithm to create a signal that is spatially
multiplexed;
transmitting the multiplexed signal from a base
station with cable channels, each cable transmitting a different one of the multiple signals;
receiving the signals at a SISO repeater system
**characterised by** separately processing each
of the multiple split signals into a simulated
Rayleigh distribution; and
combining the multiple split signals and transmitting the combined signal over a single antenna.

11. The method of claim 10, further comprising:

receiving the combined signal through multiple
antennas associated with a receiver; and
the receiver recombining the signals from the
multiple antennas in accordance with the spatially multiplexing MIMO algorithm.

**Patentansprüche**

1. SISO-Zwischenverstärker (30a, 30b, 30c), der Folgendes umfasst:

mehrere Signaleingangskanäle (32, 34), die jeweilige Eingangssignale empfangen, **gekennzeichnet durch** einen Rayleigh-Kanalsimulator
(42, 44), der jedem Eingangskanal zugeordnet
ist und zum Verarbeiten jedes empfangenen
Signals zu einem mit einer Rayleigh-Verteilung
vereinbaren Signal betreibbar ist;
und einen Kombinierer zum Kombinieren der
verarbeiteten Signale zu einem einzelnen Signal, das von dem SISO-Zwischenverstärker
weitergesendet wird.

2. SISO-Zwischenverstärker nach Anspruch 1, wobei
jeder Rayleigh-Kanalsimulator zum Multiplizieren
seines jeweiligen Eingangssignals mit einer komplexen Gaußschen Zustandsvariablen konfiguriert ist,
um ein Signal zu simulieren, das mit einer Rayleigh-Verteilung vereinbar ist.

3. SISO-Zwischenverstärker nach Anspruch 1, wobei
jeder Rayleigh-Kanalsimulator mehrere Signalverzögerungskanäle repräsentiert.

**4.** SISO-Zwischenverstärker nach Anspruch 1, wobei der SISO-Zwischenverstärker eine drahtlose Relaisstation ist,
wobei die mehreren Signaleingangskanäle jeweils ferner eine zugeordnete Spenderantenne zum Empfangen von Signalen enthalten, und
wobei das einzelne kombinierte Signal über eine einzelne Ausleuchtungsantenne weitergesendet wird.

**5.** SISO-Zwischenverstärker nach Anspruch 1, wobei der SISO-Zwischenverstärker eine Kabelrelaisstation ist,
wobei die mehreren Signaleingangskanäle jeweils ein getrenntes Signalweiterleitungskabel enthalten, das den dem Eingangskanal zugeordneten Rayleigh-Kanalsimulator aufweist, und
wobei das einzelne kombinierte Signal über eine einzelne Ausleuchtungsantenne weitergesendet wird.

**6.** SISO-Zwischenverstärker nach Anspruch 1, wobei der SISO-Zwischenverstärker eine Kabelrelaisstation ist,
wobei die mehreren Signaleingangskanäle jeweils ein getrenntes Signalweiterleitungskabel enthalten, das den dem Eingangskanal zugeordneten Rayleigh-Kanalsimulator aufweist, und
wobei das einzelne kombinierte Signal getrennt und über mehrere Weiterleitungskabel weitergesendet wird.

**7.** SISO-Zwischenverstärker nach Anspruch 1, wobei der SISO-Zwischenverstärker eine Kabelrelaisstation ist,
wobei die mehreren Signaleingangskanäle jeweils ein getrenntes Signalweiterleitungskabel enthalten, das den dem Eingangskanal zugeordneten Rayleigh-Kanalsimulator aufweist, und
wobei das einzelne kombinierte Signal geteilt wird und über mehrere Ausleuchtungsantennen weitergesendet wird.

**8.** Verfahren zum Übertragen eines MIMO-Signals, wobei das Verfahren Folgendes umfasst:

Trennen eines Signals in mehrere Signale unter Verwendung eines MIMO-Algorithmus, um ein Signal zu erzeugen, das räumlich multiplexiert ist;
Senden des multiplexierten Signals von einer Basisstation mit mehreren Antennen, wobei jede Antenne ein anderes der mehreren Signale sendet;
Empfangen der Signale bei einem SISO-Zwischenverstärkersystem, **gekennzeichnet durch**
getrenntes Verarbeiten jedes der mehreren geteilten Signale zu einer simulierten Relais-Verteilung; und

Kombinieren der mehreren geteilten Signale und Senden des kombinierten Signals über eine einzelne Antenne.

**9.** Verfahren nach Anspruch 8, das ferner Folgendes umfasst:

Empfangen des kombinierten Signals über mehrere Antennen, die einem Empfänger zugeordnet sind; und
wobei der Empfänger die Signale von den mehreren Antennen in Übereinstimmung mit dem räumlich multiplexierenden MIMO-Algorithmus wiedervereinigt.

**10.** Verfahren zum Übertragen eines Signals, wobei das Verfahren Folgendes umfasst:

Zerlegen eines Signals in mehrere Signale unter Verwendung eines MIMO-Algorithmus, um ein Signal zu erzeugen, das räumlich multiplexiert ist;
Senden des multiplexierten Signals von einer Basisstation mit Kabelkanälen, wobei jedes Kabel ein anderes der mehreren Signale überträgt;
Empfangen der Signale bei einem SISO-Zwischenverstärkersystem, **gekennzeichnet durch**
getrenntes Verarbeiten jedes der mehreren geteilten Signale zu einer simulierten Rayleigh-Verteilung; und
Kombinieren der mehreren geteilten Signale und Senden des kombinierten Signals über eine einzelne Antenne.

**11.** Verfahren nach Anspruch 10, das ferner Folgendes umfasst:

Empfangen des kombinierten Signals über mehrere Antennen, die einem Empfänger zugeordnet sind; und
wobei der Empfänger die Signale von den mehreren Antennen in Übereinstimmung mit dem räumlich multiplexierenden MIMO-Algorithmus wiedervereinigt.

**Revendications**

**1.** Répéteur SISO (30a, 30b, 30c) comprenant :

une pluralité de canaux d'entrée de signal (32, 34) recevant des signaux d'entrée respectifs, **caractérisé par** un simulateur de canal Rayleigh (42, 44) associé à chaque canal d'entrée et utilisable pour traiter chaque signal reçu en un signal cohérent avec une distribution de Rayleigh ;

et un combineur pour combiner les signaux traités en un signal unique qui est retransmis par le répéteur SISO.

**2.** Répéteur SISO selon la revendication 1, dans lequel chaque simulateur de canal de Rayleigh est configuré pour multiplier son signal d'entrée respectif par une variable aléatoire gaussienne complexe de manière à simuler un signal cohérent avec une distribution de Rayleigh.

**3.** Répéteur SISO selon la revendication 1, dans lequel chaque simulateur de canal de Rayleigh représente une pluralité de canaux de retard de signal.

**4.** Répéteur SISO selon la revendication 1,
dans lequel le répéteur SISO est une station relais sans fil,
dans lequel la pluralité de canaux d'entrée de signal comprennent en outre chacun une antenne donneuse associée pour recevoir les signaux, et
dans lequel le signal combiné unique est retransmis par l'intermédiaire d'une antenne à couverture unique.

**5.** Répéteur SISO selon la revendication 1,
dans lequel le répéteur SISO est une station relais filaire,
dans lequel la pluralité de canaux d'entrée de signal comprennent chacun un câble de relais de signal séparé ayant le simulateur de canal de Rayleigh associé avec le canal d'entrée, et
dans lequel le signal combiné unique est retransmis par l'intermédiaire d'une antenne à couverture unique.

**6.** Répéteur SISO selon la revendication 1,
dans lequel le répéteur SISO est une station relais filaire,
dans lequel la pluralité de canaux d'entrée de signal comprennent chacun un câble de relais de signal séparé ayant le simulateur de canal de Rayleigh associé avec le canal d'entrée, et
dans lequel le signal combiné unique est séparé et retransmis par l'intermédiaire d'une pluralité de câbles de relais.

**7.** Répéteur SISO selon la revendication 1,
dans lequel le répéteur SISO est une station relais filaire,
dans lequel la pluralité de canaux d'entrée de signal comprennent chacun un câble de relais de signal séparé ayant le simulateur de canal de Rayleigh associé avec le canal d'entrée, et
dans lequel le signal combiné unique est séparé et retransmis par l'intermédiaire d'une pluralité d'antennes de couverture.

**8.** Procédé pour transmettre un signal MIMO comprenant :

séparer un signal en plusieurs signaux à l'aide d'un algorithme MIMO pour créer un signal spatialement multiplexé ;
transmettre le signal multiplexé depuis une station de base avec plusieurs antennes, chaque antenne transmettant un signal différent de la pluralité de signaux ;
recevoir les signaux au niveau d'un système de répéteur SISO **caractérisé par** un traitement séparé de chacun des multiples signaux séparés en une distribution de Rayleigh simulée ; et combiner les multiples signaux séparés et transmettre le signal combiné sur une antenne unique.

**9.** Procédé selon la revendication 8, comprenant en outré :

recevoir le signal combiné à travers plusieurs antennes associées à un récepteur ; et
le récepteur recombinant les signaux provenant des multiples antennes conformément à l'algorithme MIMO de multiplexage spatial.

**10.** Procédé pour transmettre un signal comprenant :

séparer un signal en plusieurs signaux à l'aide d'un algorithme MIMO pour créer un signal qui est spatialement multiplexé ;
transmettre le signal multiplexé depuis une station de base avec des canaux filaires, chaque câble transmettant un signal différent de la pluralité de signaux ;
recevoir les signaux au niveau d'un système de répéteur SISO **caractérisé par** un traitement séparé de chacun des multiples signaux séparés en une distribution de Rayleigh simulée ; et combiner les multiples signaux séparés et transmettre le signal combiné sur une antenne unique.

**11.** Procédé selon la revendication 10, comprenant en outré :

recevoir le signal combiné à travers plusieurs antennes associées à un récepteur ; et
le récepteur recombinant les signaux provenant des multiples antennes conformément à l'algorithme MIMO de multiplexage spatial.

**FIG. 1**

**FIG. 2A**

**FIG. 2B**

FIG.3A

FIG. 4A

FIG. 4B

EP 2 351 255 B1

FIG. 5

13

FIG. 6

FIG. 7

FIG. 8

FIG. 9A

FIG. 9B

FIG. 9C

FIG. 10

FIG. 11A

FIG. 11B

FIG. 11C

**EP 2 351 255 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100728639